# EUROPEAN PATENT SPECIFICATION

(11) **EP 3 672 290 B1**
(45) Date of publication and mention of the grant of the patent: **10.08.2022**
(21) Application number: 18213721.6
(22) Date of filing: 18.12.2018
(51) Int. Cl.: H04W 12/06, H04W 12/08, H04W 12/088, H04W 4/44, H04W 12/37

(54) **CELLULAR BEHAVIOUR MANAGER**
ZELLVERHALTENSMANAGER
GESTIONNAIRE DE COMPORTEMENT CELLULAIRE

(43) Date of publication of application: 24.06.2020
(73) Proprietor: Valeo Comfort and Driving Assistance, 94046 Créteil Cedex (FR)
(72) Inventor: LEVIHN, Jens, 61381 Friedrichsdorf (DE); GROEBEL, Vincent, 61381 Friedrichsdorf (DE); WELLENS, Matthias, 61381 Friedrichsdorf (DE)
(74) Representative: Delaval, Guillaume Laurent

(56) References cited:
- WO-A1-2014/032081
- US-A1- 2016 113 043

## Description

### FIELD OF THE INVENTION

The present disclosure relates to a method for controlling a telematics control unit (TCU).

### BACKGROUND OF THE INVENTION

Telematics platforms for automotive use often offer Application Programming Interfaces (APIs) or Application/Software Development Kits (ADKs/SDKs). An example is the Sierra Wireless Legato system (http://legato.io/). In particular, for accessing cellular modem functionality there is usually a hardware abstraction layer (HAL) providing a common interface to different hardware solutions. Typical examples are RIL (Radio interface Layer) for Android and related Linux-based operating systems, NDIS for Windows-based systems, or subsets of above introduced ADKs/SDKs.

However, the available APIs do not offer sufficient functionality to monitor how the applications use the API and what impact this may have on the communication network. If - for example - an application continuously logs off and registers back on to a network the signaling load on the network will significantly increase especially when considering that similar steps may be carried out by numerous devices of the same type. Such impact on the network should be preventable.

Mobile Network Operators refer to such behavior as device aggression and continuously extend their activities to prevent such behavior and verify and certify devices before market launch. Since automotive telematics control units (TCU) will usually have to pass such operator approvals it is of special importance that device aggression can be prevented. Furthermore, automotive OEMs often require that 3rd party applications can be run on the TCU such that the TCU software needs methods to prevent malicious behavior of applications that it hosts because the latter are out of the control of the TCU manufacturer.

WO 2014/032081 A1 discloses a communications management processor configured to operate in a separate security domain from an application processor, and to mediate all access to a wireless communications network by a user application.

### SUMMARY OF THE INVENTION

It is an object of the invention to propose a method for controlling a telematics control unit (TCU) which allows a better overview over the usage of the TCU and a lower vulnerability of the TCU and to meet increasing requirements of mobile network operators.

The invention defines a method according to claim 1.

Such a method allows a better overview over the usage of the TCU, since the cellular behavior manager records all access attempts to the cellular modem hardware. Such a method provides a lower vulnerability of the TCU, since an aggressive telematics application will be controlled by the rules. Finally such a method allows to meet increasing requirements of mobile network operators, since special rules can be applied for certain telematics applications.

The invention provides that the rules are stored in the processor and storage unit. Such no additional devices are needed.

Additionally the invention provides that an update of the rules is done during runtime after successful update authentication. Such a controlled access to the rules is ensured.

Further the invention provides that the access attempts of each of the telematics applications is permitted or prohibited, wherein also an overall judgement is done in this way, that a first group of telematics applications are granted priority over a second group of telematics applications. Such an organized operation is ensured.

Additionally the invention provides that counting statistics are raised on the access attempts of each of the telematics applications and that the rules are applied on the basis of at least one of the counting statistics. Such the operation of the TCU will be increasingly improved.

Finally the invention provides that access attempts are counted by a counter and/or monitored by a timer. This is an easy applicable way to identify and prevent device aggression.

We propose to add a new feature to the HAL. The Mobile Network Operator or another entity controlling networks may define a set of rules describing what behavior will be prohibited in its network. Reasons for prohibiting certain behavior may be increased load to network nodes or other performance degrading impact. The Cellular Behavior Manager (CBM) as part of the HAL will monitor the applications accessing the cellular modem or other abstracted communication interfaces and identify behavior that violates the above described rule set.

This functionality is located in the HAL in order to also enable identification of incompliant behavior aggregated across multiple applications. All applications may on their own still behave compliant but if they ask, e.g., for contradictory actions the overall behavior may violate certain rules. The CBM will give priority to certain applications and stop the violating behavior of other applications.

The following abbreviations are used, these abbreviations are used as reference numerals where applicable:
- ADK -: application development kit
- API -: application programming interface
- CBM -: cellular behavior manager
- DNS -: domain name system
- HAL -: hardware abstraction layer
- NIDS -: network intrusion detection system
- OEM -: original equipment manufacturer
- RIL -: radio interface layer
- SDK -: software development kit

- TCU -: telematics control unit
- XML -: extensible markup language
- 3GPP -: third generation partnership project

### BRIEF DESCRIPTION OF THE DRAWINGS

The foregoing and other features and advantages of the present invention will become apparent to those skilled in the art to which the present invention relates upon reading the following description with reference to the accompanying drawing, in which:
- Figure 1: shows a sequence chart which shows how a third rule is implemented by the cellular behavior manager of the telematics control unit and
- Figure 2: shows in a schematic way a TCU on which the inventive method is applicable.

### DETAILED DESCRIPTION OF THE INVENTION

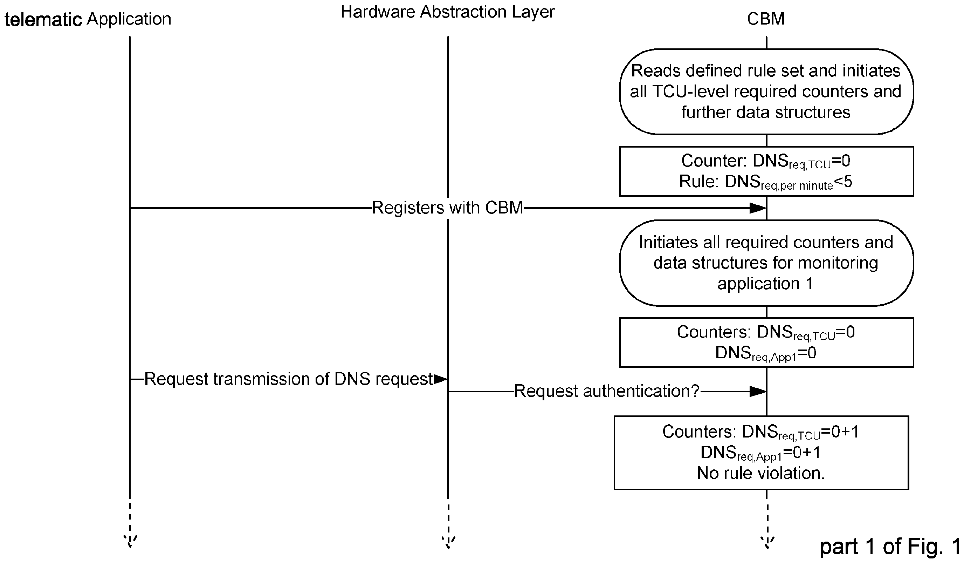

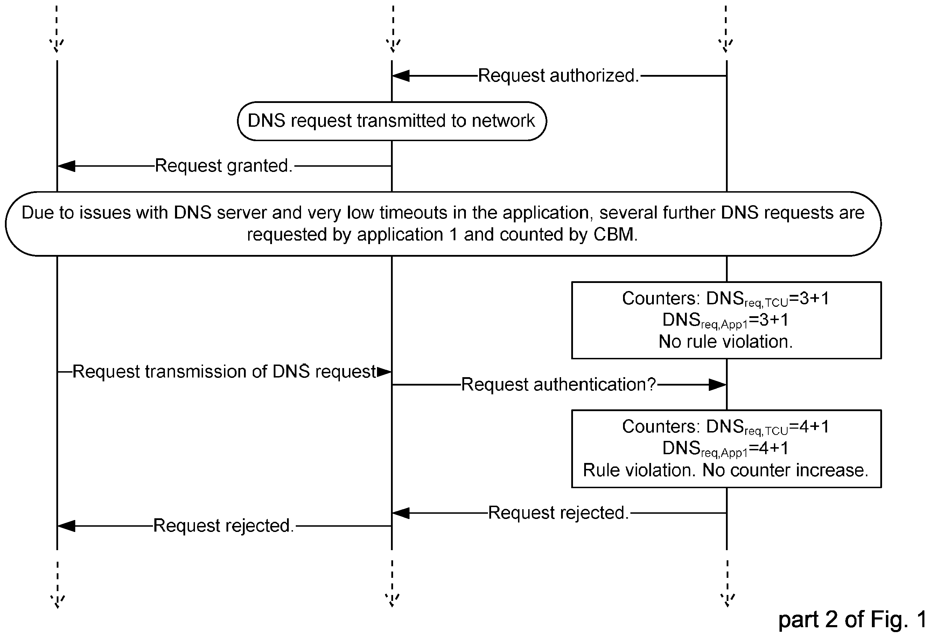

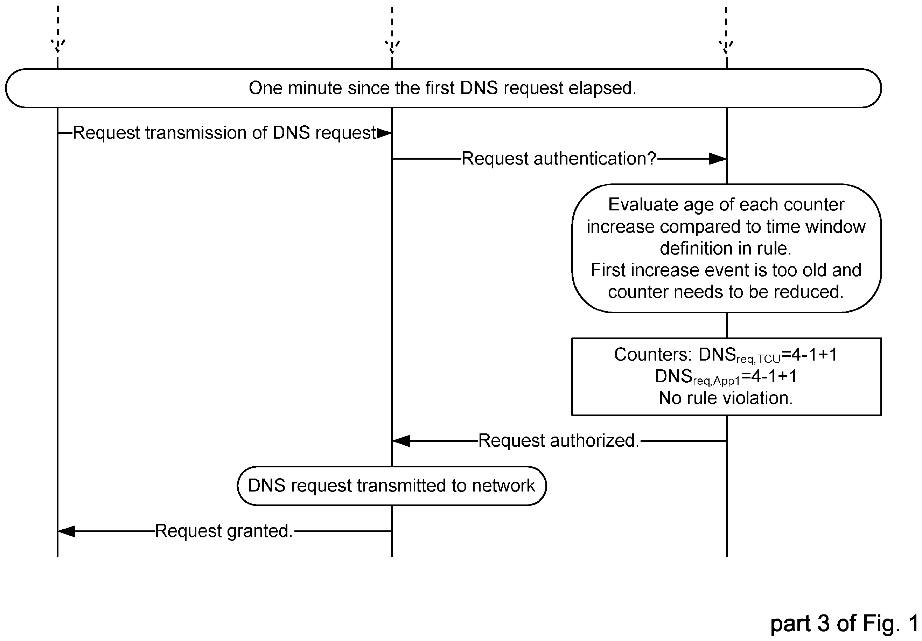

Figure 1 shows a sequence chart which shows how a third rule is implemented by the cellular behavior manager of the telematics control unit. The sequence chart is spread over 3 pages. The three pages have to be arranged among each other to get an overview of the complete sequence chart.

The Cellular Behavior Manager will read the pre-defined rules from a database but may also receive a rule update during runtime after successful update authentication.

Each rule will be evaluated on at least two levels of abstraction. The CBM will evaluate all rules against the behavior of each registered and authorized application but it will also evaluate all rules against the aggregated behavior of the complete TCU.

Most of the evaluation is based on counter statistics that are collected throughout system operation. However, rules may also describe more complex application behavior that requires combination of various counters of specified time intervals and other more advanced statistics.

According to a first example the rule is:
Number of network attach requests shall be <10 per minute.

The CBM will monitor which applications request a new attach to the network. It will count such requests per application over a configurable time window. If an attach is older than the given time period of 1 minute this will reduce the current count of events within the specified time window. If the number of attach requests within the active time window passes the threshold, i.e. 10 requests, the CBM will block the execution of the request. If multiple applications ask for network attach actions in parallel the CBM will also evaluate the rule on TCU level and sum up requests across all registered and authorized applications. In this context, the CBM will also monitor which requests have been executed. Requests that have not been executed due to earlier cancellation of the request or other reasons will not be considered for the counts since repeating the request is justified.

According to a second example the rule is:
Applications must not send keep-alive messages more often than once every 5 minutes.

Plenty of telematics applications regularly communicate with the backend servers of the automotive OEM. Such keep-alive may in the worst case trigger a complete new connection establishment handshake between TCU and the mobile network for a single and small keep-alive packet. Thus, a significant signaling load on the network enables only the exchange of a single and small message.

However, if the car is, e.g., parked without active communication it will be impossible to prevent the described overhead since no other active communication opens a connection that could be leveraged for the keep alive signaling.

The mobile network may also implement optimizations assigning only shared instead of dedicated resources to clients at the beginning of new connections and upgrading the connection to dedicated resources if required. However, this approach adds further complexity. If the TCU can ensure that above overhead is only rarely generated it may be bearable for the network.

If an application attempts to send keep alive messages more often than every 5 minutes these messages will be rejected.

This rule will also be evaluated on TCU level because ten applications each sending one keep-alive every 10 minutes will also violate above rule if their requests are evenly distributed in time. In this case, the CBM may block selected keep alive messages. Since the impacted application will most probably try another time to send its keep-alive message. Thus, the CBM indirectly broke the even distribution across time of all keep-alive-send-events.

The above named third the rule, which is described in figure 1 by a sequence chart, is:

Applications must not send more than four DNS requests per minute.

The third rule is implemented as shown in the sequence of figure 1.

The CBM will not monitor compliance to applicable standards such as 3GPP standards describing details of the communication technology and the protocol stack running on top. The CBM focuses on how clients use the resources assigned to them and how they request such resources.

The type of notation (e.g., XML) used for specifying the CBM rule set does not limit the applicability of the described invention. Any notation that is powerful enough to capture the required rule complexity is applicable.

The CBM may be implemented in various ways but above invention is not limited to a single way of implementing it but describes the concept itself.

On device driver level device aggression of the TCU could also be prevented by a coarser rule set independently of any application. However, such solutions cannot block only a single application or only a specific feature of an application but the overall functionality will be impacted. The system would have to block on a coarser level due to lack of knowledge which message belongs to which application or feature.

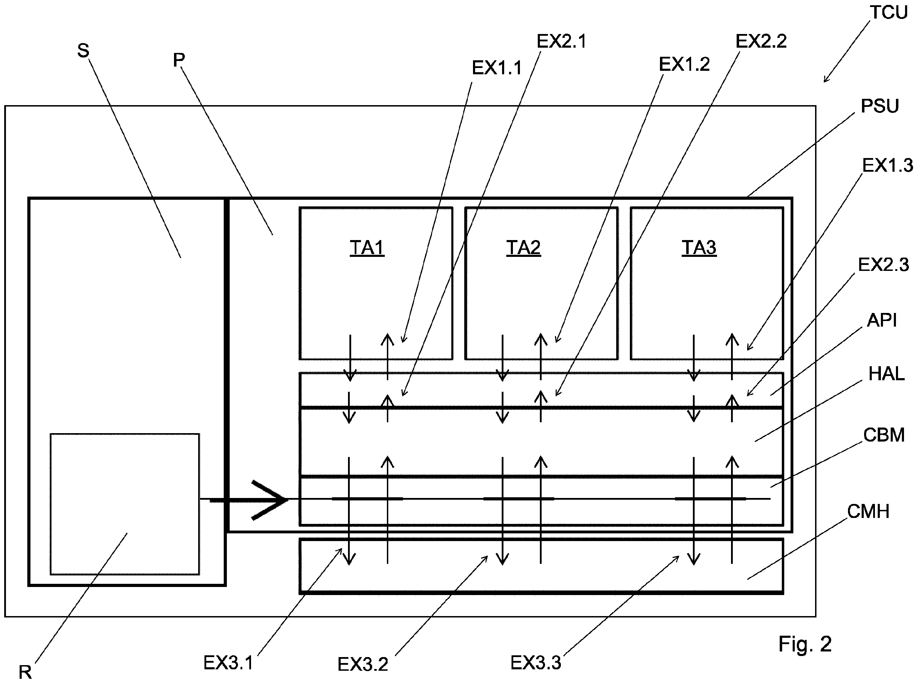

Figure 2 shows in a schematic way a telematics control unit TCU on which the inventive method for controlling a telematics control unit TCU is applicable. The TCU comprises a processor and storage unit PSU, which comprises a Processor P and a storage S. A first telematics application TA1 and a second telematics application TA2 and a third telematics application TA3 are installed on the processor and storage unit PSU.

During operation of the telematics control unit TCU there is a first exchange of commands and information EX1.1, EX1.2, EX1.3. The fist exchange of commands EX1.1, EX1.2, EX1.3 is executed on the processor and storage unit PSU between the telematics applications TA1, TA2, TA3 and an application programming interface API and is symbolized by arrows.

During operation of the telematics control unit TCU there is a second exchange of commands and information EX2.1, EX2.2, EX2.3. The second exchange of commands EX2.1, EX2.2, EX2.3 is executed on the processor and storage unit PSU between the application programming interface API and a hardware abstraction layer HAL and is also symbolized by arrows.

During operation of the telematics control unit TCU there is a third exchange of commands and information EX3.1, EX3.2, EX3.3. The third exchange of commands EX3.1, EX3.2, EX3.3 is executed on the processor and storage unit PSU between the hardware abstraction layer HAL and a cellular modem hardware CMH and is again symbolized by arrows.

Additionally a cellular behavior manager CBM is run on the processor and storage unit PSU, where the cellular behavior manager CBM between the hardware abstraction layer HAL and cellular modem hardware CMH. This arrangement of the cellular behavior manager CBM makes it possible that the third exchange of commands EX3.1, EX3.2, EX3.3 is controllable by the cellular behavior manager CBM. An access attempt of each of the telematics applications TA1, TA2, TA3 via a chain of exchange commands EX1.1-EX2.1-EX3.1 or EX1.2-EX2.2-EX3.2 or EX1.3-EX2.3-EX3.3 to the cellular modem hardware CMH are recorded by the cellular behavior manager CBM. The cellular behavior manager CBM is such configured in such a way that each access attempt is according to rules R permitted or prohibited. The rules R are stored in the processor and storage unit PSU.

According to the rules R the first telematics application TA1 belongs to a first group FG which a prior access to the cellular modem hardware CMH and the second and third telematics applications TA2, TA3 belong to a second group SG of applications which has subordinated access to the cellular modem hardware CMH.

### REFERENCE NUMERALS:

- API: application programming interface
- CMH: cellular modem hardware
- CBM: cellular behavior manager

- EX1.1: first exchange of command and information of TA1
- EX1.2: first exchange of command and information of TA2
- EX1.3: first exchange of command and information of TA3

- EX2.1: second exchange of command and information of TA1
- EX2.2: second exchange of command and information of TA2
- EX2.3: second exchange of command and information of TA3

- EX3.1: third exchange of command and information of TA1
- EX3.2: third exchange of command and information of TA2
- EX3.3: third exchange of command and information of TA3

- HAL: hardware abstraction layer
- P: Processor of PSU
- PSU: processor and storage unit
- R: rules
- S: storage of PSU
- TA1: first telematics application TA1
- TA2: second telematics application TA2
- TA3: third telematics application TA3
- TCU: telematics control unit

## Claims

1. Method for controlling a telematics control unit (TCU), the telematics control unit (TCU) comprising a cellular modem hardware (CMH) and a processor and storage unit (PSU), the processor and storage unit (PSU) comprising a Processor (P) and a storage (S),
- wherein a first exchange of commands and information (EX1.1, EX1.2, EX1.3) is executed on the processor and storage unit (PSU) between at least two telematics applications (TA1, TA2, TA3) and an application programming interface (API) of the processor and storage unit (PSU),
- wherein a second exchange of commands and information (EX2.1, EX2.2, EX2.3) is executed on the processor and storage unit (PSU) between the application programming interface (API) and an hardware abstraction layer (HAL) of the processor and storage unit (PSU) and
- wherein a third exchange of commands and information (EX3.1, EX3.2, EX3.3) is executed on the processor and storage unit (PSU) between the hardware abstraction layer (HAL) and a cellular modem hardware (CMH), wherein a cellular behavior manager (CBM) which is part of the hardware abstraction layer (HAL) is run on the processor and storage unit (PSU),
- wherein the third exchange of commands and information (EX3.1, EX3.2, EX3.3) is controlled by the cellular behavior manager (CBM),
- wherein access attempts of all telematics applications (TA1, TA2, TA3) to the cellular modem hardware (CMH) are recorded by the cellular behavior manager (CBM) via a chain of exchange commands and
- wherein the cellular behavior manager (CBM) is configured such that it will monitor the telematics applications accessing the cellular modem hardware (CMH) and identify behavior that violates a set of rules (R) and permit or prohibit each access attempt accordingly.

2. Method for controlling a telematics control unit (TCU) according to claim 1, **characterized in that** the rules (R) are stored in the processor and storage unit (PSU).

3. Method for controlling a telematics control unit (TCU) according to claim 1 or 2, characterized an update of the rules (R) is done during runtime after successful update authentication.

4. Method for controlling a telematics control unit (TCU) according to claim 1 or 2 or 3, **characterized in that** the access attempts of each of the telematics applications (TA1, TA2, TA3) is permitted or prohibited, taking into account that a first group (FG) of telematics applications (TA1) are granted priority over a second group (SC) of telematics applications (TA2, TA3).

5. Method for controlling a telematics control unit (TCU) according to claim 1 or 2 or 3 or 4, **characterized in that** counting statistics are raised on the access attempts of each of the telematics applications (TA1, TA2, TA3) and that the rules (R) are applied on the basis of at least one of the counting statistics.

6. Method for controlling a telematics control unit (TCU) according to claim 1 or 2 or 3 or 4 or 5, **characterized in that** access attempts are counted by a counter and/or monitored by a timer.

## Patentansprüche

1. Verfahren zum Steuern einer Telematiksteuereinheit (TCU), wobei die Telematiksteuereinheit (TCU) eine Mobilfunkmodemhardware (CMH) und eine Einheit (PSU) aus Prozessor und Speicher umfasst, wobei die Einheit (PSU) aus Prozessor und Speicher einen Prozessor (P) und einen Speicher (S) umfasst,
- wobei ein erster Austausch von Befehlen und Informationen (EX1.1, EX1.2, EX1.3) zwischen mindestens zwei Telematikanwendungen (TA1, TA2, TA3) und einer Anwendungsprogrammschnittstelle (API) der Einheit (PSU) aus Prozessor und Speicher auf der Einheit (PSU) aus Prozessor und Speicher ausgeführt wird,
- wobei ein zweiter Austausch von Befehlen und Informationen (EX2.1, EX2.2, EX2.3) zwischen der Anwendungsprogrammschnittstelle (API) und einer Hardwareabstraktionsschicht (HAL) der Einheit (PSU) aus Prozessor und Speicher auf der Einheit (PSU) aus Prozessor und Speicher ausgeführt wird und
- wobei ein dritter Austausch von Befehlen und Informationen (EX3.1, EX3.2, EX3.3) zwischen der Hardwareabstraktionsschicht (HAL) und einer Mobilfunkmodemhardware (CMH) auf der Einheit (PSU) aus Prozessor und Speicher ausgeführt wird,
- wobei ein Mobilfunkverhaltensmanager (CBM), der Teil der Hardwareabstraktionsschicht (HAL) ist, auf der Einheit (PSU) aus Prozessor und Speicher läuft,
- wobei der dritte Austausch von Befehlen und Informationen (EX3.1, EX3.2, EX3.3) durch den Mobilfunkverhaltensmanager (CBM) gesteuert wird,
- wobei Zugriffsversuche aller Telematikanwendungen (TA1, TA2, TA3) auf die Mobilfunkmodemhardware (CMH) über eine Kette von Austauschbefehlen durch den Mobilfunkverhaltensmanager (CBM) aufgezeichnet werden und
- wobei der Mobilfunkverhaltensmanager (CBM) derart konfiguriert ist, dass er die Telematikanwendungen, die auf die Mobilfunkmodemhardware (CMH) zugreifen, überwacht und Verhalten identifiziert, das einen Satz von Regeln (R) verletzt, und dementsprechend jeden Zugriffsversuch erlaubt oder ablehnt.

2. Verfahren zum Steuern einer Telematiksteuereinheit (TCU) nach Anspruch 1, **dadurch gekennzeichnet, dass** die Regeln (R) in der Einheit (PSU) aus Prozessor und Speicher gespeichert sind.

3. Verfahren zum Steuern einer Telematiksteuereinheit (TCU) nach Anspruch 1 oder 2, **dadurch gekennzeichnet, dass** eine Aktualisierung der Regeln (R) nach einer erfolgreichen Aktualisierungsauthentifizierung während der Laufzeit vorgenommen wird.

4. Verfahren zum Steuern einer Telematiksteuereinheit (TCU) nach Anspruch 1 oder 2 oder 3, **dadurch gekennzeichnet, dass** die Zugriffsversuche von jeder der Telematikanwendungen (TA1, TA2, TA3) unter der Berücksichtigung, dass einer ersten Gruppe (FG) von Telematikanwendungen (TA1) Priorität vor einer zweiten Gruppe (SC) von Telematikanwendungen (TA2, TA3) gewährt wird, erlaubt oder abgelehnt wird.

5. Verfahren zum Steuern einer Telematiksteuereinheit (TCU) nach Anspruch 1 oder 2 oder 3 oder 4, **dadurch gekennzeichnet, dass** Zählstatistiken auf die Zugriffsversuche von jeder der Telematikanwendungen (TA1, TA2, TA3) erhoben werden und dass die Regeln (R) auf der Basis von mindestens einer der Zählstatistiken angewendet werden.

6. Verfahren zum Steuern einer Telematiksteuereinheit (TCU) nach Anspruch 1 oder 2 oder 3 oder 4 oder 5, **dadurch gekennzeichnet, dass** Zugriffsversuche durch einen Zähler gezählt und/oder durch einen Taktgeber überwacht werden.

## Revendications

1. Procédé de commande d'une unité de commande télématique (ICU), l'unité de commande télématique (ICU) comprenant un matériel de modem cellulaire (CMH) et une unité de traitement et de stockage (PSU), l'unité de traitement et de stockage (PSU) comprenant un processeur (P) et une unité de stockage (S),
- dans lequel un premier échange de commandes et d'informations (EXl.1, EXl.2, EXl.3) est exécuté sur l'unité de traitement et de stockage (PSU) entre au moins deux applications télématiques (TA1, TA2, TA3) et une interface de programmation d'applications (API) de l'unité de traitement et de stockage (PSU),
- dans lequel un deuxième échange de commandes et d'informations (EX2.1, EX2.2, EX2.3) est exécuté sur l'unité de traitement et de stockage (PSU) entre l'interface de programmation d'applications (API) et une couche d'abstraction matérielle (HAL) de l'unité de traitement et de stockage (PSU) et
- dans lequel un troisième échange de commandes et d'informations (EX3.1, EX3.2, EX3.3) est exécuté sur l'unité de traitement et de stockage (PSU) entre la couche d'abstraction matérielle (HAL) et un matériel de modem cellulaire (CMH),
dans lequel un gestionnaire de comportement cellulaire (CBM) qui fait partie de la couche d'abstraction matérielle (HAL) est lancé sur l'unité de traitement et de stockage (PSU),
- dans lequel le troisième échange de commandes et d'informations (EX3.1, EX3.2, EX3.3) est commandé par le gestionnaire de comportement cellulaire (CBM),
- dans lequel des tentatives d'accès de toutes les applications télématiques (TA1, TA2, TA3) au matériel de modem cellulaire (CMH) sont enregistrées par le gestionnaire du comportement cellulaire (CBM) par l'intermédiaire d'une chaîne de commandes d'échange et
- dans lequel le gestionnaire de comportement cellulaire (CBM) est configuré de manière à ce qu'il surveille les applications télématiques accédant au matériel de modem cellulaire (CMH) et identifie un comportement qui viole un ensemble de règles (R) et à ce qu'il autorise ou interdise en conséquence chaque tentative d'accès.

2. Procédé de commande d'une unité de commande télématique (ICU) selon la revendication 1, **caractérisé en ce que** les règles (R) sont stockées dans l'unité de traitement et de stockage (PSU).

3. Procédé de commande d'une unité de commande télématique (ICU) selon la revendication 1 ou 2, **caractérisé en ce qu'**une mise à jour des règles (R) est effectuée pendant le temps d'exécution après une authentification de mise à jour réussie.

4. Procédé de commande d'une unité de commande télématique (ICU) selon la revendication 1 ou 2 ou 3, **caractérisé en ce que** les tentatives d'accès de chacune des applications télématiques (TA1, TA2, TA3) sont autorisées ou interdites en tenant compte du fait que la priorité est accordée à un premier groupe (FG) d'applications télématiques (TA1) par rapport à un deuxième groupe (SC) d'applications télématiques (TA2, TA3) .

5. Procédé de commande d'une unité de commande télématique (ICU) selon la revendication 1 ou 2 ou 3 ou 4, **caractérisé en ce que** des statistiques de comptage sont relevées sur les tentatives d'accès de chacune des applications télématiques (TA1, TA2, TA3) et que les règles (R) sont appliquées sur la base d'au moins l'une des statistiques de comptage.

6. Procédé de commande d'une unité de commande télématique (ICU) selon la revendication 1 ou 2 ou 3 ou 4 ou 5, **caractérisé en ce que** les tentatives d'accès sont comptées par un compteur et/ou surveillées par un temporisateur.
